# EUROPEAN PATENT APPLICATION

(11) **EP 4 607 635 A1**
(43) Date of publication of application: **27.08.2025**
(21) Application number: 25154978.8
(22) Date of filing: 30.01.2025
(51) Int. Cl.: H01M 10/04, H01M 10/0587, H01M 50/46, H01M 50/474, H01M 50/477, H01M 50/486

(54) **RECHARGEABLE BATTERY AND ELECTRODE ASSEMBLY THEREOF**

(30) Priority: 23.02.2024 KR 20240026639
(71) Applicant: SAMSUNG SDI CO., LTD., Yongin-si, Gyeonggi-do 17084 (KR)
(72) Inventor: Jung, Wonil, Yongin-si, Gyeonggi-do 17084 (KR)
(74) Representative: Gulde & Partner

(57) **Abstract**

An electrode assembly, the electrode assembly including a first electrode, a first separator, a second electrode, and a second separator wound in a stacked state, wherein, the second electrode comprises an uncoated portion formed at an outermost turn, the second separator covers a part of the uncoated portion, and the uncoated portion comprises a covering portion covered with the second separator, and an exposed portion connected to the covering portion and exposed from the second separator.

## Description

### BACKGROUND

### 1. Field

A rechargeable battery and an electrode assembly thereof is disclosed.

### 2. Description of the Related Art

Unlike primary batteries, rechargeable batteries are batteries that are repeatedly charged and discharged. Small-capacity rechargeable batteries are used in small and portable electronic devices such as mobile phones, laptop computers, and camcorders. High-capacity and high-density rechargeable batteries are used as power sources for driving motors in hybrid vehicles and electric vehicles or for energy storage.

### SUMMARY

Embodiments are directed to an electrode assembly, the electrode assembly including a first electrode, a first separator, a second electrode, and a second separator wound in a stacked state, wherein, the second electrode may comprise an uncoated portion formed at an outermost turn, the second separator covering a part of the uncoated portion, and the uncoated portion may comprise a covering portion covered with the second separator, and an exposed portion connected to the covering portion and exposed from the second separator.

An implementation may include the uncoated portion of the second electrode forming at least one turn at an outermost part.

An implementation may include the exposed portion being formed as a quarter turn to a half turn in the one turn.

An implementation may include the exposed portion being formed in an entire area of the second electrode in a width direction.

An implementation may include the exposed portion being formed as a quarter turn, and the second separator being formed as a three quarters turn.

An implementation may include the exposed portion being formed as a half turn, and the second separator being formed as a half turn.

An implementation may include a swelling tape interposed on an inner surface of the exposed portion.

An implementation may include the exposed portion being formed as a quarter turn to a half turn in the one turn, and the swelling tape being less than a turn amount of the exposed portion in a winding direction.

An implementation may include the exposed portion being formed as a quarter turn, and the swelling tape is less than the quarter turn.

An implementation may include the exposed portion being formed in a partial area of the second electrode in an entire range of a width direction.

An implementation may include the exposed portion being formed in a center area of the second electrode in the entire range of the width direction.

An implementation may include the exposed portion being formed as one turn in the center area.

An implementation may include the exposed portion being formed as a quarter turn to a half turn in the one turn in the center area.

An implementation may include the exposed portion being formed in a circular shape in the center area.

An implementation may include the exposed portion being formed in an irregular shape in the center area.

An implementation may include the exposed portion being formed in an area of one of both sides of the second electrode in the entire range of the width direction.

Embodiments are directed to a rechargeable battery including an electrode assembly formed by winding a first electrode, a first separator, a second electrode, and a second separator in a stacked state, a case accommodating the electrode assembly, and a cap assembly sealing an opening of the case, wherein, the second electrode may comprise an uncoated portion formed at an outermost turn, the second separator may cover a part of the uncoated portion, the uncoated portion may comprise an exposed portion exposed from the second separator, and the exposed portion and the second separator may be in contact with an inner surface of the case.

An implementation may include a swelling tape interposed on an inner surface of the exposed portion.

An implementation may include the exposed portion being formed as a quarter turn to a half turn in the one turn, and the swelling tape being less than a turn amount of the exposed portion in a winding direction.

An implementation may include the exposed portion being formed as a quarter turn, and the swelling tape being less than the quarter turn.

### BRIEF DESCRIPTION OF THE DRAWINGS

Features will become apparent to those of skill in the art by describing in detail exemplary embodiments with reference to the attached drawings in which:
FIG. 1 is a partial perspective view of a rechargeable battery according to a first embodiment of the present disclosure.
FIG. 2 is an exploded partial view of an electrode assembly applied to FIG. 1.
FIG. 3 is a perspective view of the electrode assembly including electrodes and separators of FIG. 2.
FIG. 4 is a cross-sectional view of the rechargeable battery to which the electrode assembly of FIG. 2 is applied.
FIG. 5 is a graph illustrating a relationship between neglected days and voltages with respect to the electrode assembly of FIGS. 3 and 4.
FIG. 6 is an exploded partial view of an electrode assembly applied to a rechargeable battery according to a comparative example.
FIG. 7 is a perspective view of the electrode assembly including electrodes and separators of FIG. 6.
FIG. 8 is a cross-sectional view of the rechargeable battery to which the electrode assembly of FIG. 7 is applied.
FIG. 9 is a graph illustrating a relationship between neglected days and voltages with respect to the electrode assembly of FIGS. 7 and 8.
FIG. 10 is a perspective view of an electrode assembly applied to a rechargeable battery according to a second embodiment of the present disclosure.
FIG. 11 is a graph illustrating a relationship between neglected days and voltages with respect to the electrode assembly of FIG. 10.
FIG. 12 is a perspective view of an electrode assembly applied to a rechargeable battery according to a third embodiment of the present disclosure.
FIG. 13 is a cross-partial view of a rechargeable battery to which the electrode assembly of FIG. 12 is applied.
FIG. 14 is a graph illustrating a relationship between neglected days and voltages with respect to the electrode assembly of FIGS. 12 and 13.
FIG. 15 is a perspective view of an electrode assembly applied to a rechargeable battery according to a fourth embodiment of the present disclosure.
FIG. 16 is a graph illustrating a relationship between neglected days and voltages with respect to the electrode assembly of FIG. 15.
FIG. 17 is a perspective view of an electrode assembly applied to a rechargeable battery according to a fifth embodiment of the present disclosure.
FIG. 18 is a graph illustrating a relationship between neglected days and voltages with respect to the electrode assembly of FIG. 17.
FIG. 19 is a perspective view of an electrode assembly applied to a rechargeable battery according to a sixth embodiment of the present disclosure.
FIG. 20 is a graph illustrating a relationship between neglected days and voltages with respect to the electrode assembly of FIG. 19.
FIG. 21 is a perspective view of an electrode assembly applied to a rechargeable battery according to a seventh embodiment of the present disclosure.
FIG. 22 is a graph illustrating a relationship between neglected days and voltages with respect to the electrode assembly of FIG. 21.
FIG. 23 is a perspective view of an electrode assembly applied to a rechargeable battery according to an eighth embodiment of the present disclosure.
FIG. 24 is a graph illustrating a relationship between neglected days and voltages with respect to the electrode assembly of FIG. 23.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, with reference to the accompanying drawings, various embodiments of the present disclosure will be described in detail so that those skilled in the art may easily carry out the present disclosure. The present disclosure may be embodied in many different forms and is not limited to the embodiments set forth herein. In order to clearly explain the present disclosure in the drawings, parts not related to the description are omitted, and identical or similar components are denoted by the same reference numerals throughout the specification.

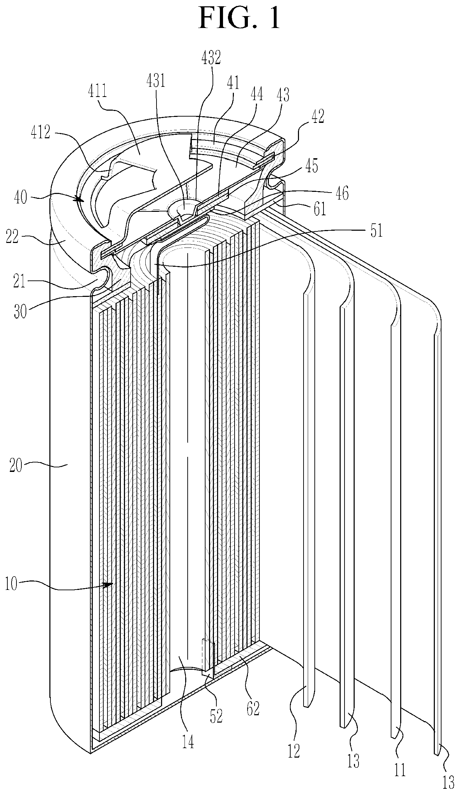

FIG. 1 is a partial perspective view of a rechargeable battery according to a first embodiment of the present disclosure. Referring to FIG. 1, the rechargeable battery of the first embodiment may include an electrode assembly 10 for charging and discharging, a case 20 in which the electrode assembly 10 is embedded, and a cap assembly 40 coupled to an opening of the case 20 with a gasket 30 therebetween.

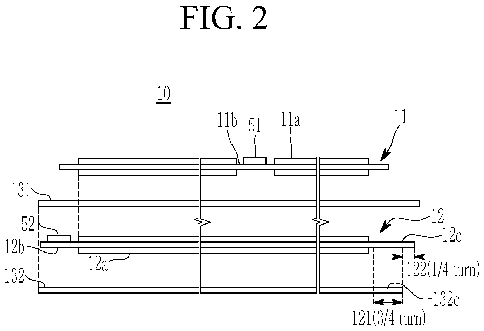

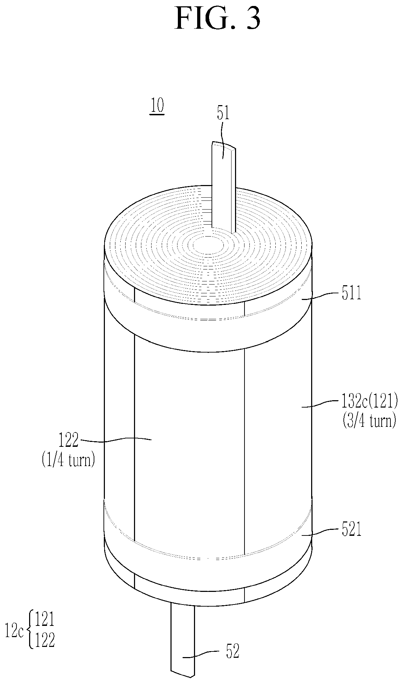

FIG. 2 is an exploded partial view of an electrode assembly applied to FIG. 1. FIG. 3 is a perspective view of the electrode assembly including electrodes and separators of FIG. 2. Referring to FIGS. 1 to 3, the electrode assembly 10 may include a first electrode 11 (e.g., anode), a first separator 131, a second electrode 12 (e.g., cathode), and a second separator 132 which may be sequentially disposed.

The electrode assembly 10 may be formed by winding the first electrode 11, the first separator 131, the second electrode 12, and the second separator 132 in a jelly roll state. The first and second separators 131 and 132 may act as insulators between the wound first and second electrodes 11 and 12.

The first electrode 11 may be electrically connected to the cap assembly 40 through a first tab 51, and the second electrode 12 may be electrically connected to the case 20 through a second tab 52. The first electrode 11 may be connected to the case 20 through the first tab 51, and the second electrode 12 may be connected to the cap assembly 40 through the second tab 52.

The electrode assembly 10 may be formed in a cylinder. The cylindrical electrode assembly 10 may have a center pin 14 at its center. The center pin 14 may be formed of a material with a higher strength than that of the electrode assembly 10, may maintain the electrode assembly 10 in a cylindrical shape, and may discharge internal gas generated by charging and discharging through an intermediate passage.

The first electrode 11 may include first coating portions 11a in an area in which an active material is coated on both sides of a first current collector formed of a metal foil (e.g., Al foil), and a first uncoated portion 11b that is set as an area in which the first current collector is exposed because the active material may not be coated between the first coating portions 11a in a longitudinal direction of the first current collector. The first tab 51 may be connected to the first uncoated portion 11b.

The second electrode 12 may include second coating portions 12a in an area in which the active material is coated on both sides of a second current collector formed of a metal foil (e.g., CU foil), and a second uncoated portion 12b that may be set as an area in which the second current collector is exposed because the active material may not be coated in the second current collector. The second tab 52 may be connected to the second uncoated portion 12b.

Referring again to FIG. 1, in the jelly roll state, the first tab 51 connected to the first uncoated portion 11b of the first electrode 11 may be electrically connected to the cap assembly 40 with a first insulating member 61 interposed therebetween, and the second tab 52 connected to the second uncoated portion 12b of the second electrode 12 may be electrically connected to the case 20 with a second insulating member 62 therebetween.

The first insulating member 61 may electrically insulate an upper end of the electrode assembly 10 from the cap assembly 40, and the second insulating member 62 may electrically insulate a lower end of the electrode assembly 10 from the case 20.

The case 20 may have an opening formed in one side so as to insert the electrode assembly 10 from the outside, and may be formed in a cylindrical shape to accommodate the cylindrical electrode assembly 10. The case 20 may be connected to the second tab 52 by welding to act as a second electrode terminal (e.g., a negative electrode terminal) in the rechargeable battery, and may be formed of a conductive metal such as aluminum, aluminum alloy, or nickel-plated steel.

The cap assembly 40 may be coupled to the opening of the case 20 with the gasket 30 therebetween, electrically insulated from the case 20, and may seal the case 20 accommodating the electrode assembly 10 and the electrolyte.

The cap assembly 40 may be electrically connected to the electrode assembly 10 through a current interrupting device and the first tab 51. The first insulating member 61 may penetrate the first tab 51.

The cap assembly 40 may include a cap plate 41, a positive temperature coefficient (PTC) element 42, a vent plate 43, an insulator 44, a middle plate 45, and a sub plate 46 which may be sequentially disposed from the outside toward the inside of the case 20.

The cap plate 41 may be finally connected to the first tab 51 to act as a first electrode terminal (e.g., a positive electrode terminal) in the rechargeable battery, and may form a protrusion 411 that may protrude to the outside of the case 20 and an exhaust port 412 that may be opened to the side of the protrusion 411 and may discharge internal gas.

The current interrupting device in the cap assembly 40 may be formed in a vent plate 43 and a sub plate 46 may be electrically separated by an insulator 44 and a connection portion partially connecting the vent plate 43 to the sub plate 46. The connection portion may be formed by welding the vent plate 43 and the sub plate 46 or by clinching the vent plate 43 and the sub plate 46.

In an implementation, the vent plate 43 forming one side of the current interrupting device may be installed inside the cap plate 41 and may be electrically connected to the sub plate 46 forming the other side of the current interrupting device.

In addition, the vent plate 43 may have a vent 431 at its center and be welded or clinched to the sub plate 46 and be separated from the welded sub plate 46 by internal pressure. The vent 431 may break under preset pressure conditions, discharges internal gas generated by charging and discharging, and blocks an electrical connection with the sub plate 46.

In an implementation, the vent 431 may protrude from the vent plate 43 toward the inside of the case 20. The vent plate 43 may have a notch 432 around the vent 431 that guides the breakage of the vent 431.

Therefore, when the internal pressure of the case 20 increases due to the generation of gas, the notch 432 may be previously damaged and discharge the gas to the outside through the vent plate 43 and the exhaust port 412, thereby advantageously preventing explosion of the rechargeable battery.

The sub plate 46 may face the vent plate 43 and may be electrically connected to the vent 431 and the middle plate 45. The middle plate 45 may be spaced apart from the vent plate 43 and may be coupled to the vent plate 43 with the insulator 44 therebetween. Also, the vent 431 may protrude via through holes of the insulator 44 and the middle plate 45 and may be connected to the sub plate 46.

Accordingly, the middle plate 45 may be electrically connected to the vent 431 and the vent plate 43 through the sub plate 46. In addition, the middle plate 45 may be connected to the first tab 51 by welding, and the first tab 51 may penetrate the first insulating member 61 and may be welded to the first uncoated portion 11b of the first electrode 11.

As a result, the first tab 51 may be electrically connected to the cap plate 41 via the middle plate 45, the sub plate 46, the vent 431, the vent plate 43, and the PTC element 42 in order.

The cap assembly 40 configured as above may be inserted into the opening of the case 20 with the gasket 30 therebetween, and then fixed to the opening of the case 20 through a crimping process to form the rechargeable battery.

The case 20 may form a clamping portion 22 that holds an outer edge of the cap assembly 40 by interposing a beading portion 21 recessed in the center of the case 20 in a diameter direction and the gasket 30 on the opening side.

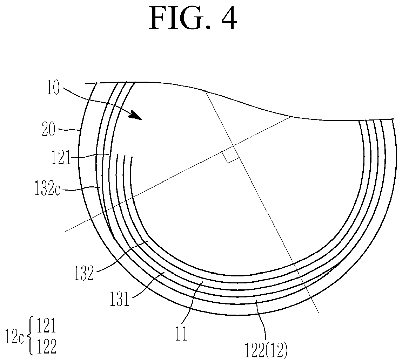

FIG. 4 is a cross-sectional view of the rechargeable battery to which the electrode assembly of FIG. 2 is applied. Referring to FIGS. 2 to 4, in the electrode assembly 10, the second electrode 12 may further include an uncoated portion 12c formed at the outermost turn. The second separator 132 may cover a part of the uncoated portion 12c to form a covering portion 121, and the uncoated portion 12c may further include an exposed portion 122 exposed from the second separator 132.

The uncoated portion 12c of the second electrode 12 may form at least 1 turn at the outermost part. The exposed portion 122 may be formed as a 1/4 turn to a 1/2 turn in the 1 turn. The exposed portion 122 may be formed in an entire area of the second electrode 12 in a width direction (up and down direction in FIG. 3).

The exposed portion 122 may be formed as the 1/4 turn, and the covering portion 121 may be formed as a 3/4 turn. The exposed portion 122 may be in close contact with an inner surface of the case 20 and thus may form an electrical connection structure between the second electrode 12 and the case 20 with a wide surface area, thereby reducing the cell resistance of the rechargeable battery.

The second separator 132 located at the outermost part of the electrode assembly 10 may sufficiently moisten an electrolyte in an area excluding the exposed portion 122, thereby removing an excess electrolyte. As the excess electrolyte decreases, a Ni-band phenomenon may be improved.

The reason why the Ni-band phenomenon may occur in the uncoated portion 12c of the second electrode 12 is that an electrolyte moistening effect may disappear in the second separator 132 located at the outermost part, and, when an isolated excess electrolyte is generated by the second separator 132, a Ni elution may occur in that part.

If the Ni-band phenomenon continues, a voltage drops due to a slight short circuit between the first and second electrodes 11 and 12, and a voltage imbalance between multiple cells may occur inside a battery pack of an electric vehicle (EV) and a battery pack of a power tool including the multiple cells.

The voltage imbalance may cause safety accidents such as a sudden drop in the lifespan of cells and an ignition due to a current concentration. The second separator 132 forming the exposed portion 122 of the uncoated portion 12c in the second electrode 12 may improve such a Ni-band phenomenon.

In the first embodiment, the exposed portion 122 formed as the 1/4 turn in the outermost turn of the uncoated portion 12c of the second electrode 12 may be in contact with the inner surface of the case 20 to reduce the internal resistance of a cell. An end portion 132c located at the outermost part, which may form the covering portion 121 of a 3/4 turn in the outermost turn of the second separator 132, may provide the electrolyte moistening effect, thereby preventing the generation of the isolated excess electrolyte. Therefore, the Ni elution due to the excess electrolyte may be prevented, and thus, the Ni-band phenomenon may not occur.

As described above, in the first embodiment, the internal resistance of the cell may be reduced through the exposed portion 122, and the Ni-band phenomenon may be prevented through the end portion 132c of the second separator 132 forming the covering portion 121. The electrode assembly 10 may be taped with first and second finishing tapes 511 and 521 on the first and second tabs 51 and 52 to maintain a cylindrical shape in a wound state.

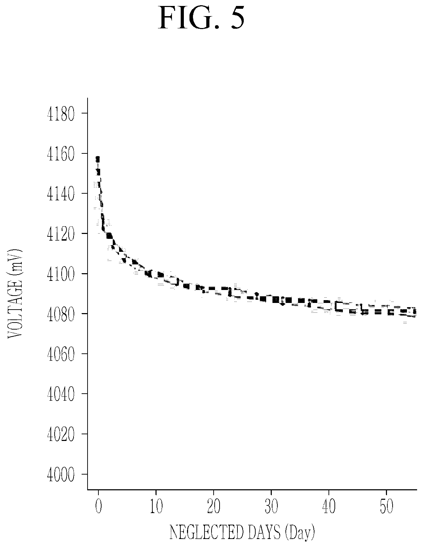

FIG. 5 is a graph illustrating a relationship between neglected days and voltages with respect to the electrode assembly of FIGS. 3 and 4. Referring to FIG. 5, open circuit voltage (OCV) characteristics may be obtained by fully charging 256 rechargeable battery cells including the electrode assembly 10 of the first embodiment, storing and neglecting the 256 rechargeable battery cells at a temperature of 60 °C.

The first embodiment illustrates stable OCV characteristics that an OCV rapidly decreased from 4160 mV to 4100 mV in all the 256 cells until 3 neglected days, and thereafter, gradually dropped. It may be seen from these results that in the 256 cells of the first embodiment, the generation of an excess electrolyte may be prevented, a Ni elution due to the excess electrolyte may be prevented, and a Ni-band phenomenon may not occur.

Hereinafter, various comparative examples and embodiments of the present disclosure are described. Compared to the first embodiment, descriptions of the same configurations are omitted and descriptions of different configurations are described.

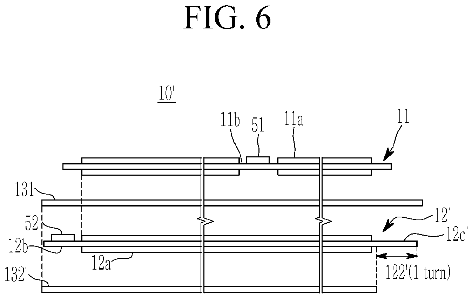

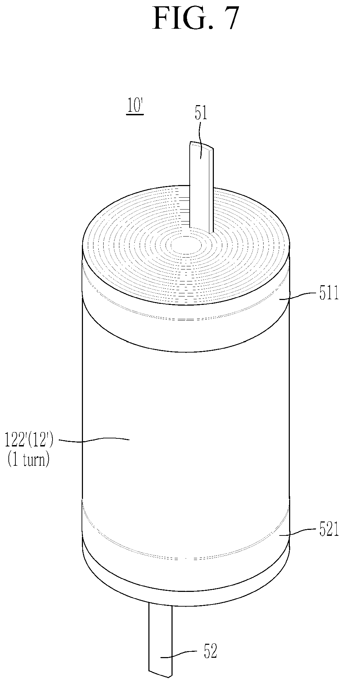

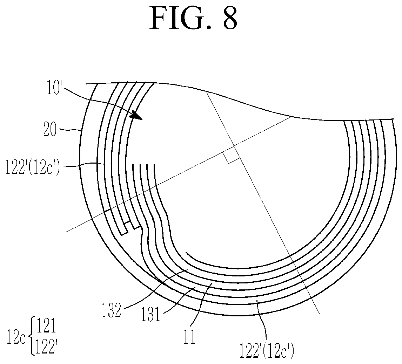

FIG. 6 is an exploded partial view of an electrode assembly applied to a rechargeable battery according to a comparative example. FIG. 7 is a perspective view of the electrode assembly including electrodes and separators of FIG. 6. FIG. 8 is a cross-sectional view of the rechargeable battery to which the electrode assembly of FIG. 7 is applied.

Referring to FIGS. 6 to 8, in an electrode assembly 10' of the comparative example, a second electrode 12' may further include an uncoated portion 12c' formed at the outermost turn. A second separator 132' may not cover the uncoated portion 12c' of the outermost turn.

The uncoated portion 12c' of the second electrode 12' may form at least 1 turn at the outermost part. An exposed portion 122' may be formed as the entire 1 turn. The exposed portion 122' may be formed in an entire area of the second electrode 12' in a width direction (up and down direction in FIG. 7).

As an example, the exposed portion 122' may be formed as the 1 turn, and the second separator 132' may not be formed as the 1 turn of the uncoated portion 12c'. Compared to the exposed portion 122 of the first embodiment, the exposed portion 122' of the comparative example may be in closer contact with an inner surface of the case 20 and thus may connect the second electrode 12' to the case 20 with a wider surface area, thereby further reducing the cell resistance of the rechargeable battery.

Since the second separator 132' may not be located at the outermost part of the electrode assembly 10', the electrolyte may not be sufficiently moistened and thus, the excess electrolyte may not be removed. As the excess electrolyte increases, a Ni-band phenomenon may not be improved.

The reason why the Ni-band phenomenon may occur in the uncoated portion 12c' of the second electrode 12' is that an electrolyte moistening effect may disappear in the second separator 132' located at the outermost part, and an isolated excess electrolyte may be generated by the second separator 132', a Ni elution may occur in that part.

In the comparative example, the exposed portion 122' may be formed as a 1/4 turn in the outermost turn of the uncoated portion 12c' of the second electrode 12' in contact with the inner surface of the case 20 to reduce the internal resistance of a cell. The second separator 132' may not exist at the outermost turn and may not provide the electrolyte moistening effect, thereby generating the isolated excess electrolyte. Therefore, the Ni elution due to the excess electrolyte may occur, and thus, the Ni-band phenomenon may occur.

As described above, in the comparative example, the internal resistance of the cell may be reduced through the exposed portion 122', but the second separator 132' does not prevent the generation of excess electrolyte, and thus, the Ni-band phenomenon may occur.

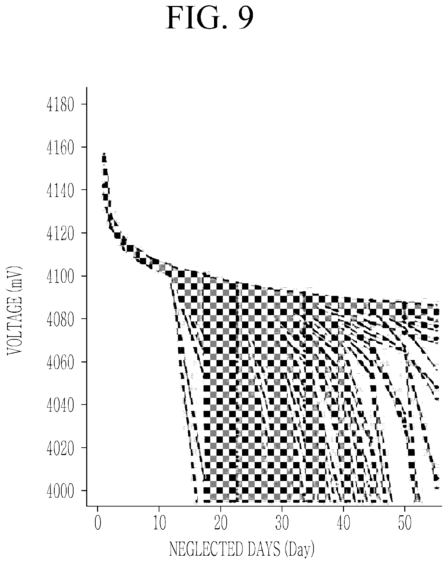

FIG. 9 is a graph illustrating a relationship between neglected days and voltages with respect to the electrode assembly of FIGS. 7 and 8. Referring to FIG. 9, OCV characteristics were obtained by fully charging 256 rechargeable battery cells including the electrode assembly 10' of the comparative example, storing and neglecting the 256 rechargeable battery cells at a temperature of 60 °C.

The comparative example shows unstable OCV characteristics that an OCV rapidly decreased from 4160 mV to 4100 mV in all the 256 cells until 3 neglected days, and thereafter, rapidly dropped. These results illustrate that in 256 cells of the comparative example, an excess electrolyte may be generated, a Ni elution due to the excess electrolyte may occur, and a Ni-band phenomenon may occur.

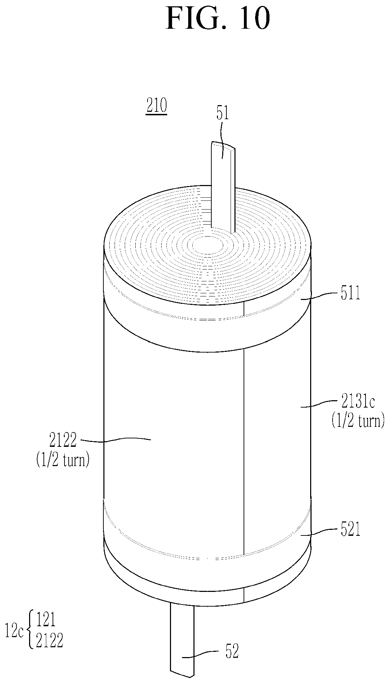

FIG. 10 is a perspective view of an electrode assembly applied to a rechargeable battery according to a second embodiment of the present disclosure. Referring to FIG. 10, in an electrode assembly 210 of the second embodiment, an exposed portion 2122 may be formed as a 1/2 turn in the uncoated portion 12c of the second electrode 12, and the second separator 132 may be formed in a 1/2 turn of the uncoated portion 12c. Compared to the exposed portion 122 of the first embodiment, the exposed portion 2122 of the second embodiment may form an electrical connection structure between the second electrode 12 and the case 20 with a wider surface area, thereby further reducing the cell resistance of the rechargeable battery.

The exposed portion 2122 may be formed as the 1/2 turn in the outermost turn of the uncoated portion 12c and may be in contact with an inner surface of the case 20 to reduce the internal resistance of a cell. An end portion 2132c located at the outermost part, which may form the covering portion 121 of the 1/2 turn in the outermost turn of the second separator 132, may provide an electrolyte moistening effect, thereby preventing the generation of an isolated excess electrolyte. Therefore, a Ni elution due to the excess electrolyte may be prevented, and thus, a Ni-band phenomenon may not occur.

As described above, in the second embodiment, the internal resistance of the cell may be reduced through the exposed portion 2122, and the Ni-band phenomenon may be prevented through the end portion 2132c of the second separator 132 forming the covering portion 121.

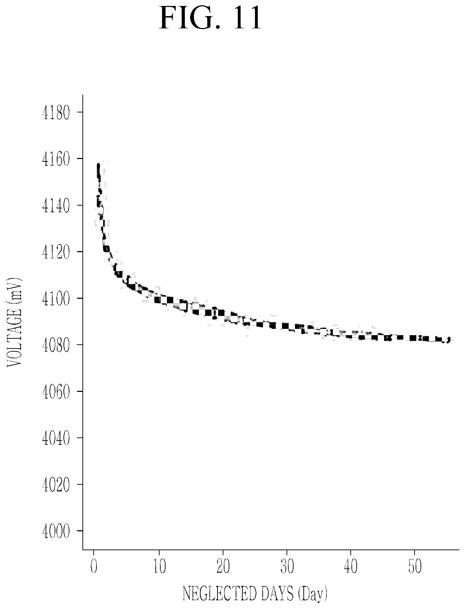

FIG. 11 is a graph illustrating a relationship between neglected days and voltages with respect to the electrode assembly of FIG. 10. Referring to FIG. 11, OCV characteristics were obtained by fully charging 256 rechargeable battery cells including an electrode assembly 210 of the second embodiment, storing and neglecting the 256 rechargeable battery cells at a temperature of 60 °C.

The second embodiment shows stable OCV characteristics that an OCV rapidly decreased from 4160 mV to 4100 mV in all the 256 cells until 3 neglected days, and thereafter, gradually dropped. These results illustrate that in the 256 cells of the second embodiment, the generation of an excess electrolyte may be prevented, a Ni elution due to the excess electrolyte may be prevented, and a Ni-band phenomenon may not occur.

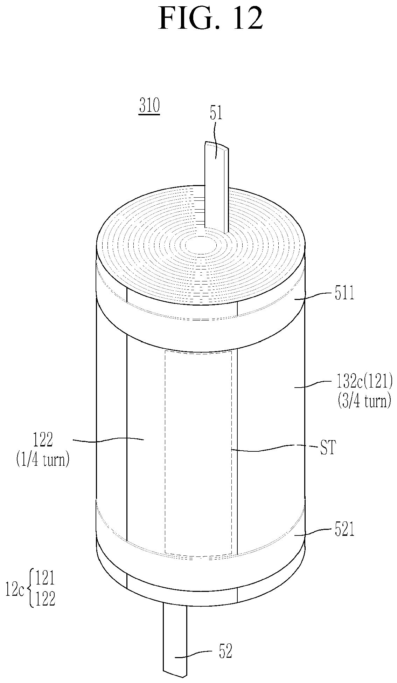

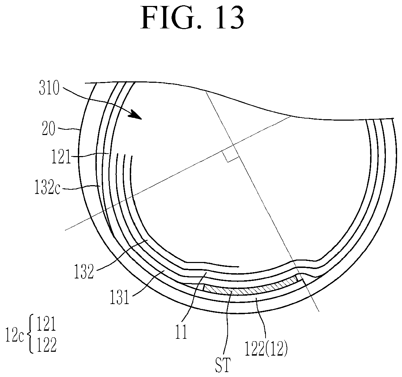

FIG. 12 is a perspective view of an electrode assembly applied to a rechargeable battery according to a third embodiment of the present disclosure. FIG. 13 is a cross-partial view of a rechargeable battery to which the electrode assembly of FIG. 12 is applied. Referring to FIGS. 12 and 13, an electrode assembly 310 of the third embodiment may further include a swelling tape ST interposed on an inner surface of the exposed portion 122. The swelling tape ST may adhere the exposed portion 122 to the inner surface of the case 20 as close as possible, and thus, maximize the adhesion between the exposed portion 122 and the case 20, thereby advantageously further reducing the internal resistance of the cell compared to the first embodiment.

The uncoated portion 12c of the second electrode 12 may form at least 1 turn at the outermost part. The exposed portion 122 may be formed as a 1/4 turn to a 1/2 turn of the 1 turn. The swelling tape ST may be less than a turn amount of the exposed portion 122 in a winding direction. In an implementation, the exposed portion 122 may be formed as the 1/4 turn, and the swelling tape ST may be less than the 1/4 turn.

Therefore, the swelling tape ST may maximize a contact between the exposed portion 122 and the case 20 and may not interfere with the exposure of the exposed portion 122. In an implementation, the swelling tape ST may prevent a reduction in a contact area between the exposed portion 122 and the case 20.

Even when the swelling tape ST is applied, the end portion 132c located at the outermost part, which may form the covering portion 121 of a 3/4 turn of the outermost turn of the second separator 132, may provide an electrolyte moistening effect, thereby preventing the generation of an isolated excess electrolyte. Therefore, a Ni elution due to the excess electrolyte may be prevented, and thus, a Ni-band phenomenon may not occur.

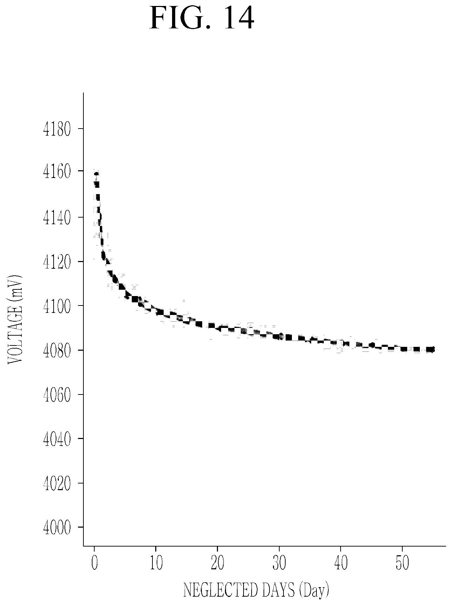

FIG. 14 is a graph illustrating a relationship between neglected days and voltages with respect to the electrode assembly of FIGS. 12 and 13. Referring to FIG. 14, OCV characteristics were obtained by fully charging 256 rechargeable battery cells including an electrode assembly 310 of the third embodiment, storing and neglecting the 256 rechargeable battery cells at a temperature of 60 °C.

The third embodiment shows stable OCV characteristics that an OCV rapidly decreased from 4160 mV to 4100 mV in all the 256 cells until 3 neglected days, and thereafter, gradually dropped. These results illustrate that in the 256 cells of the third embodiment, the generation of an excess electrolyte may be prevented, a Ni elution due to the excess electrolyte may be advantageously prevented, and a Ni-band phenomenon may not occur.

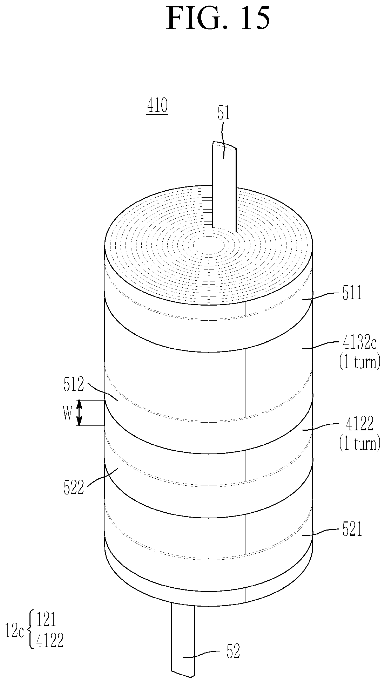

FIG. 15 is a perspective view of an electrode assembly applied to a rechargeable battery according to a fourth embodiment of the present disclosure. Referring to FIG. 15, an exposed portion 4122 in the uncoated portion 12c of the second electrode 12 provided in an electrode assembly 410 of the fourth embodiment may be formed in a partial area of the second electrode 12 in the outermost turn in an entire range of a width direction (up and down direction in FIG. 15).

As an example, the exposed portion 4122 may be formed in a center area of the second electrode 12 in the entire range of the width direction (up and down direction in FIG. 15). The exposed portion 4122 may be formed as a 1 turn with a set width W in the center area in the width direction. Compared to a structure in which the exposed portion 122 of the first embodiment electrically connects the second electrode 12 to the case 20 in the entire range of the width direction, there may be a difference in that the exposed portion 4122 of the fourth embodiment may electrically connect the second electrode 12 to the case 20 in an entire range of a circumferential direction, but the cell resistance of the rechargeable battery may be reduced.

The exposed portion 4122 formed as the 1 turn in the center area of the outermost turn of the uncoated portion 12c may be in contact with an inner surface of the case 20 to reduce the internal resistance of a cell.

An end portion 4132c located at the outermost part, which may form a covering portion of a 1 turn on upper and lower sides of the exposed portion 4122 in the outermost turn of the second separator 132, may provide an electrolyte moistening effect, thereby preventing the generation of an isolated excess electrolyte. Therefore, a Ni elution due to the excess electrolyte may be advantageously prevented, and thus, a Ni-band phenomenon may not occur.

As described above, in the fourth embodiment, the internal resistance of the cell may be reduced through the exposed portion 4122, and the Ni-band phenomenon may be prevented through the end portion 4132c of the second separator 132 forming the covering portion. The electrode assembly 410 may be taped with first and second finishing tapes 511 and 521 on the first and second tabs 51 and 52 to maintain a cylindrical shape in a wound state, and taped with third and fourth finishing tapes 512 and 522 on both sides of the exposed portion 4122 to maintain the cylindrical shape in the wound state.

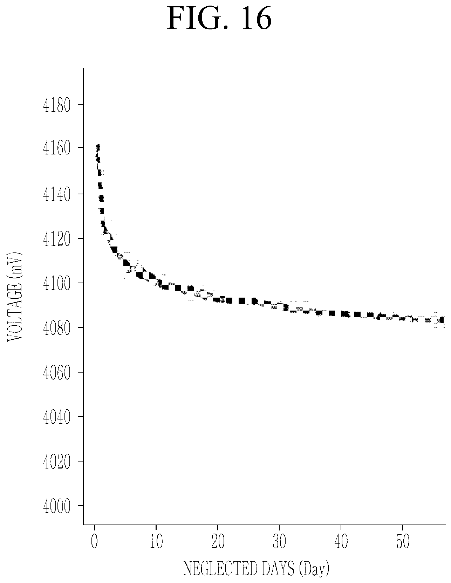

FIG. 16 is a graph illustrating a relationship between neglected days and voltages with respect to the electrode assembly of FIG. 15. Referring to FIG. 16, OCV characteristics may be obtained by fully charging 256 rechargeable battery cells including the electrode assembly 410 of the fourth embodiment, storing and neglecting the 256 rechargeable battery cells at a temperature of 60 °C.

The fourth embodiment shows stable OCV characteristics that an OCV rapidly decreased from 4160 mV to 4100 mV in all the 256 cells until 3 neglected days, and thereafter, gradually dropped. These results illustrate that in the 256 cells of the fourth embodiment, the generation of an excess electrolyte may be advantageously prevented, a Ni elution due to the excess electrolyte may be prevented, and a Ni-band phenomenon may not occur.

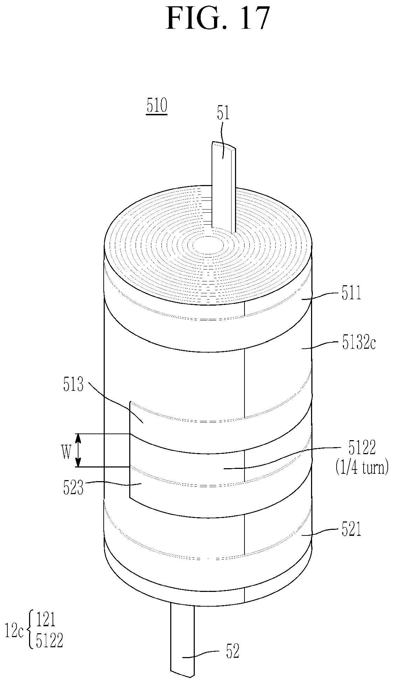

FIG. 17 is a perspective view of an electrode assembly applied to a rechargeable battery according to a fifth embodiment of the present disclosure. Referring to FIG. 17, an exposed portion 5122 in the uncoated portion 12c of the second electrode 12 provided in an electrode assembly 510 of the fifth embodiment may be formed in a center area of the second electrode 12 in an entire range of a width direction (up and down direction in FIG. 17) and formed at a part of a 1 turn with the set width W in the center area.

In an implementation, the exposed portion 5122 may be formed as a 1/4 turn to a 1/2 turn of the 1 turn. The exposed portion 5122 of the fifth embodiment may be formed as the 1/4 turn. Compared to a structure in which the exposed portion 4122 of the fourth embodiment electrically connects the second electrode 12 to the case 20 as the 1 turn, there may be a difference in that the exposed portion 5122 of the fifth embodiment electrically connects the second electrode 12 to the case 20 as the 1/4 turn, but the cell resistance of the rechargeable battery may be reduced.

The exposed portion 5122 formed as the 1/4 turn in the center area of the outermost turn of the uncoated portion 12c may be in contact with an inner surface of the case 20 to reduce the internal resistance of a cell.

An end portion 5132c located at the outermost part, which may form a covering portion of a 3/4 turn of the 1 turn on upper and lower sides of the exposed portion 5122 in the outermost turn of the second separator 132, may provide an electrolyte moistening effect, thereby preventing the generation of an isolated excess electrolyte. Therefore, a Ni elution due to the excess electrolyte may be advantageously prevented, and thus, a Ni-band phenomenon may not occur.

As described above, in the fifth embodiment, the internal resistance of the cell may be reduced through the exposed portion 5122, and the Ni-band phenomenon may be prevented through the end portion 5132c of the second separator 132 forming the covering portion. The electrode assembly 510 may be taped with first and second finishing tapes 511 and 521 on the first and second tabs 51 and 52 to maintain a cylindrical shape in a wound state, and taped with third and fourth finishing tapes 513 and 523 on both sides of the exposed portion 5122 to maintain the cylindrical shape in the wound state.

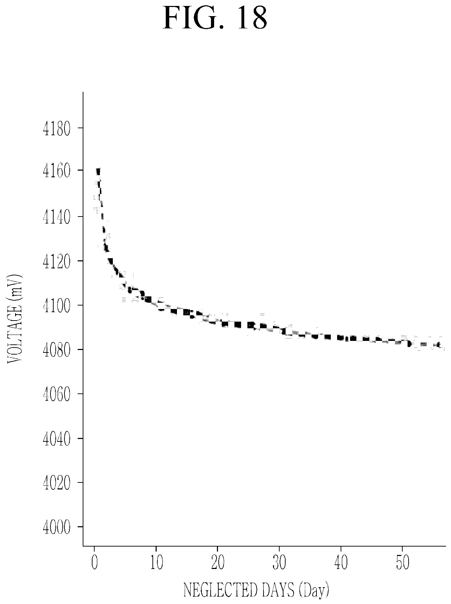

FIG. 18 is a graph illustrating a relationship between neglected days and voltages with respect to the electrode assembly of FIG. 17. Referring to FIG. 18, OCV characteristics may be obtained by fully charging 256 rechargeable battery cells including the electrode assembly 510 of the fifth embodiment, storing and neglecting the 256 rechargeable battery cells at a temperature of 60 °C.

The fifth embodiment shows stable OCV characteristics that an OCV rapidly decreased from 4160 mV to 4100 mV in all the 256 cells until 3 neglected days, and thereafter, gradually dropped. These results illustrate that in the 256 cells of the fifth embodiment, the generation of an excess electrolyte may be advantageously prevented, a Ni elution due to the excess electrolyte may be prevented, and a Ni-band phenomenon may not occur.

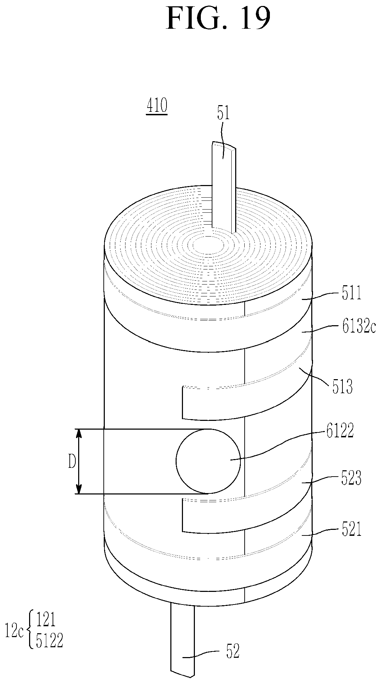

FIG. 19 is a perspective view of an electrode assembly applied to a rechargeable battery according to a sixth embodiment of the present disclosure. Referring to FIG. 19, an exposed portion 6122 in the uncoated portion 12c of the second electrode 12 provided in an electrode assembly 610 of the sixth embodiment may be formed in a center area in a width direction (up and down direction in FIG. 19) with a set diameter D in a circular shape.

Compared to a structure in which the exposed portion 5122 of the fifth embodiment electrically connects the second electrode 12 to the case 20 as a 1/4 turn, there may be a difference in that the exposed portion 6122 of the sixth embodiment electrically connects the second electrode 12 to the case 20 in the circular shape, but the cell resistance of the rechargeable battery may be reduced.

The exposed portion 6122 formed in the circular shape in the center area of the outermost turn of the uncoated portion 12c may be in contact with an inner surface of the case 20 to reduce the internal resistance of a cell.

An end portion 6132c located at the outermost part, which may form a covering portion in a circumferential direction on upper and lower sides of the exposed portion 6122 in the outermost turn of the second separator 132, may provide an electrolyte moistening effect, thereby preventing the generation of an isolated excess electrolyte. Therefore, a Ni elution due to the excess electrolyte may be advantageously prevented, and thus, a Ni-band phenomenon may not occur.

As described above, in the sixth embodiment, the internal resistance of the cell may be reduced through the exposed portion 6122, and the Ni-band phenomenon may be prevented through the end portion 6132c of the second separator 132 forming the covering portion. The electrode assembly 610 may be taped with first and second finishing tapes 511 and 521 on the first and second tabs 51 and 52 to maintain a cylindrical shape in a wound state, and taped with the third and fourth finishing tapes 513 and 523 on both sides of the exposed portion 6122 to maintain the cylindrical shape in the wound state.

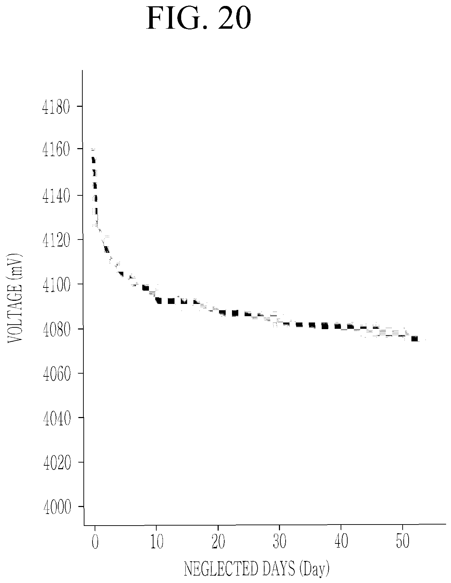

FIG. 20 is a graph illustrating a relationship between neglected days and voltages with respect to the electrode assembly of FIG. 19. Referring to FIG. 20, OCV characteristics may be obtained by fully charging 256 rechargeable battery cells including the electrode assembly 610 of the sixth embodiment, storing and neglecting the 256 rechargeable battery cells at a temperature of 60 °C.

The sixth embodiment shows stable OCV characteristics that an OCV rapidly decreased from 4160 mV to 4100 mV in all the 256 cells until 3 neglected days, and thereafter, gradually dropped. These results illustrate that in the 256 cells of the sixth embodiment, the generation of an excess electrolyte may be prevented, a Ni elution due to the excess electrolyte may be advantageously prevented, and a Ni-band phenomenon may not occur.

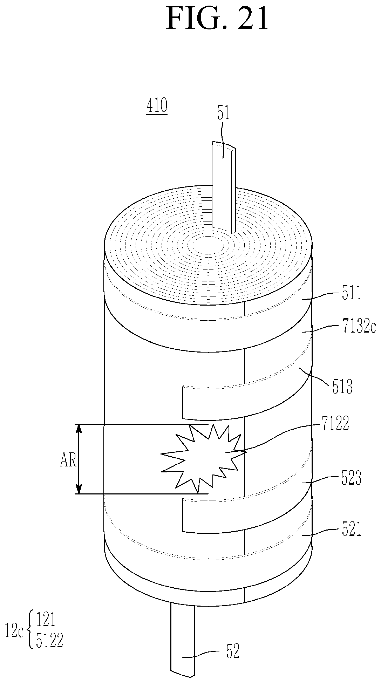

FIG. 21 is a perspective view of an electrode assembly applied to a rechargeable battery according to a seventh embodiment of the present disclosure. Referring to FIG. 21, an exposed portion 7122 in the uncoated portion 12c of the second electrode 12 provided in an electrode assembly 710 of the seventh embodiment may be formed in a center area in a width direction (up and down direction in FIG. 21) with a set area AR in an irregular shape. The area AR of the exposed portion 7122, which is an area capable of reducing direct current internal resistance (DC-IR), may exceed 0.01mm².

Compared to a structure in which the exposed portion 6122 of the sixth embodiment electrically connects the second electrode 12 to the case 20 in a circular shape, there may be a difference in that the exposed portion 7122 of the seventh embodiment electrically connects the second electrode 12 to the case 20 in the irregular shape, but the cell resistance of the rechargeable battery may be reduced, thus lowering the energy loss during the charging process.

The exposed portion 7122 formed in the irregular shape in the center area of the outermost turn of the uncoated portion 12c may be in contact with an inner surface of the case 20 to reduce the internal resistance of a cell. An end portion 7132c located at the outermost part, which may form a covering portion in a circumferential direction on upper and lower sides of the exposed portion 7122 in the outermost turn of the second separator 132, may provide an electrolyte moistening effect, thereby preventing the generation of an isolated excess electrolyte. Therefore, a Ni elution due to the excess electrolyte may be advantageously prevented, and thus, a Ni-band phenomenon may not occur.

As described above, in the seventh embodiment, the internal resistance of the cell may be reduced through the exposed portion 7122, and the Ni-band phenomenon may be prevented through the end portion 7132c of the second separator 132 forming the covering portion.

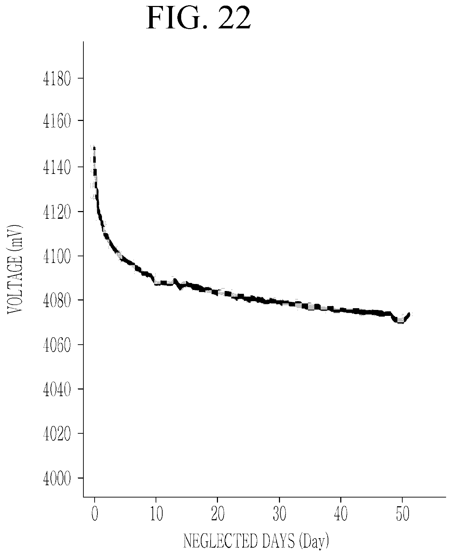

FIG. 22 is a graph illustrating a relationship between neglected days and voltages with respect to the electrode assembly of FIG. 21. Referring to FIG. 22, OCV characteristics may be obtained by fully charging 256 rechargeable battery cells including the electrode assembly 710 of the seventh embodiment, storing and neglecting the 256 rechargeable battery cells at a temperature of 60 °C.

The seventh embodiment shows stable OCV characteristics that an OCV rapidly decreased from 4160 mV to 4100 mV in all the 256 cells until 3 neglected days, and thereafter, gradually dropped. These results illustrate that in the 256 cells of the seventh embodiment, the generation of an excess electrolyte may be advantageously prevented, a Ni elution due to the excess electrolyte may be prevented, and a Ni-band phenomenon may not occur.

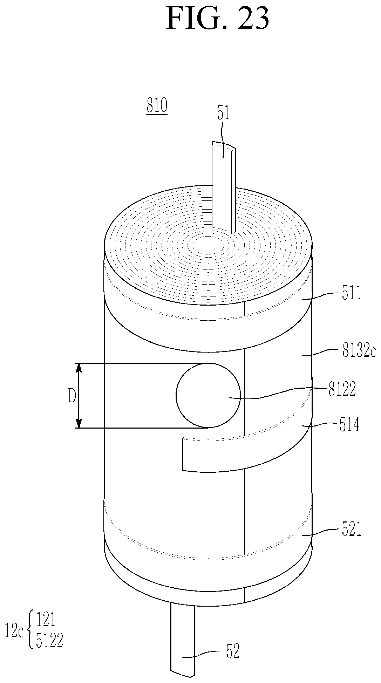

FIG. 23 is a perspective view of an electrode assembly applied to a rechargeable battery according to an eighth embodiment of the present disclosure. Referring to FIG. 23, an exposed portion 8122 in the uncoated portion 12c of the second electrode 12 provided in an electrode assembly 810 of the eighth embodiment may be formed in an area of one of both sides of the second electrode 12 in an entire range of a width direction (up and down direction in FIG. 23). The exposed portion 8122 may be formed with the set diameter D in a circular shape in an area of an upper side of both sides of the second electrode 12 in the entire range of the width direction.

Compared to a structure in which the exposed portion 6122 of the sixth embodiment electrically connects the second electrode 12 to the case 20 in a center area in the width direction, there may be a difference in that the exposed portion 8122 of the eighth embodiment electrically connects the second electrode 12 to the case 20 in the area of the upper side in the width direction, but the cell resistance of the rechargeable battery may be reduced.

The exposed portion 8122 formed in the circular shape in the area of the upper side in the outermost turn of the uncoated portion 12c may be in contact with an inner surface of the case 20 to reduce the internal resistance of a cell. An end portion 8132c located at the outermost part, may form a covering portion in a circumferential direction on a lower side of the exposed portion 8122 in the outermost turn of the second separator 132, may provide an electrolyte moistening effect, thereby preventing the generation of an isolated excess electrolyte. Therefore, a Ni elution due to the excess electrolyte may be advantageously prevented, and thus, a Ni-band phenomenon may not occur.

As described above, in the eighth embodiment, the internal resistance of the cell may be reduced through the exposed portion 8122, and the Ni-band phenomenon may be prevented through the end portion 8132c of the second separator 132 forming the covering portion. The electrode assembly 810 may be taped with first and second finishing tapes 511 and 521 on the first and second tabs 51 and 52 to maintain a cylindrical shape in a wound state, and taped with a fifth finishing tape 514 in a center area of one side of the exposed portion 8122 to maintain the cylindrical shape in the wound state.

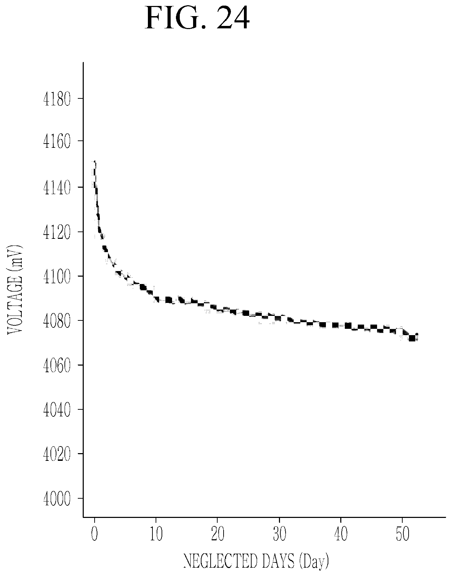

FIG. 24 is a graph illustrating a relationship neglected days and voltages with respect to the electrode assembly of FIG. 23. Referring to FIG. 24, OCV characteristics may be obtained by fully charging 256 rechargeable battery cells including the electrode assembly 810 of the eighth embodiment, storing and neglecting the 256 rechargeable battery cells at a temperature of 60 °C.

The eighth embodiment shows stable OCV characteristics that an OCV rapidly decreased from 4160 mV to 4100 mV in all the 256 cells until 3 neglected days, and thereafter, gradually dropped. These results illustrate that in the 256 cells of the eighth embodiment, the generation of an excess electrolyte may be advantageously prevented, a Ni elution due to the excess electrolyte may be prevented, and a Ni-band phenomenon may not occur.

By way of summation and review, a rechargeable battery in which a negative electrode substrate is exposed through a separator and an electrode assembly thereof is disclosed. A rechargeable battery may include an electrode assembly, charging and discharging current, a case or a pouch accommodating the electrode assembly and an electrolyte, and an electrode terminal connected to the electrode assembly and withdrawing the electrode assembly from the case or the pouch. The electrode assembly may be formed in a jelly roll type formed by winding electrode plates and separators, or a stack type formed by stacking electrode plates and separators.

In order to improve the cell resistance of cylindrical rechargeable batteries, a substrate finishing method may be applied to electrode assemblies. When the substrate finishing method is applied, if a Ni-band occurs due to a Ni elution, a problem of low voltage may occur in electrode assemblies.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode assembly (10, 10', 210, 310, 410, 510, 610, 710, 810), the electrode assembly (10, 10', 210, 310, 410, 510, 610, 710, 810) comprising:
a first electrode (11), a first separator (131), a second electrode (12, 12'), and a second separator (132, 132') wound in a stacked state, wherein:
the second electrode (12, 12') comprises an uncoated portion (12c') formed at an outermost turn,
the second separator (132, 132') covers a part of the uncoated portion (12c'), and
the uncoated portion (12c') comprises a covering portion (121) covered with the second separator (132, 132'); and
an exposed portion (122, 122', 2122, 4122, 5122, 6122, 7122, 8122) connected to the covering portion (121) and exposed from the second separator (132, 132').

2. The electrode assembly (10, 10', 210, 310, 410, 510, 610, 710, 810) as claimed in claim 1, wherein the uncoated portion (12c') of the second electrode (12, 12') forms at least one turn at an outermost part and/or wherein the exposed portion (122, 122', 2122, 4122, 5122, 6122, 7122, 8122) is formed as a quarter turn to a half turn in the one turn.

3. The electrode assembly (10, 10', 210, 310, 410, 510, 610, 710, 810) as claimed in claim 1 or 2, wherein the exposed portion (122, 122', 2122, 4122, 5122, 6122, 7122, 8122) is formed in an entire area of the second electrode (12, 12') in a width direction.

4. The electrode assembly (10, 10', 210, 310, 410, 510, 610, 710, 810) as claimed in claims 1 to 3, wherein the exposed portion (122, 122', 2122, 4122, 5122, 6122, 7122, 8122) is formed as a quarter turn, and the second separator (132, 132') is formed as a three quarters turn.

5. The electrode assembly (10, 10', 210, 310, 410, 510, 610, 710, 810) as claimed in claims 1 to 4, wherein the exposed portion (122, 122', 2122, 4122, 5122, 6122, 7122, 8122) is formed as a half turn, and the second separator (132, 132') is formed as a half turn.

6. The electrode assembly (10, 10', 210, 310, 410, 510, 610, 710, 810) as claimed in claims 2 to 5, further comprising a swelling tape interposed on an inner surface of the exposed portion (122, 122', 2122, 4122, 5122, 6122, 7122, 8122).

7. The electrode assembly (10, 10', 210, 310, 410, 510, 610, 710, 810) as claimed in claim 6, wherein the exposed portion (122, 122', 2122, 4122, 5122, 6122, 7122, 8122) is formed as a quarter turn to a half turn in the one turn, and the swelling tape is less than a turn amount of the exposed portion (122, 122', 2122, 4122, 5122, 6122, 7122, 8122) in a winding direction.

8. The electrode assembly (10, 10', 210, 310, 410, 510, 610, 710, 810) as claimed in claim 6, wherein the exposed portion (122, 122', 2122, 4122, 5122, 6122, 7122, 8122) is formed as a quarter turn, and the swelling tape is less than the quarter turn.

9. The electrode assembly (10, 10', 210, 310, 410, 510, 610, 710, 810) as claimed in claims 1 to 8, wherein the exposed portion (122, 122', 2122, 4122, 5122, 6122, 7122, 8122) is formed in a partial area of the second electrode (12, 12') in an entire range of a width direction.

10. The electrode assembly (10, 10', 210, 310, 410, 510, 610, 710, 810) as claimed in claim 9, wherein the exposed portion (122, 122', 2122, 4122, 5122, 6122, 7122, 8122) is formed in a center area of the second electrode (12, 12') in the entire range of the width direction.

11. The electrode assembly (10, 10', 210, 310, 410, 510, 610, 710, 810) as claimed in claim 9, wherein the exposed portion (122, 122', 2122, 4122, 5122, 6122, 7122, 8122) is formed as one turn or as a quarter turn to a half turn in the one turn in the center area.

12. The electrode assembly (10, 10', 210, 310, 410, 510, 610, 710, 810) as claimed in claim 9, wherein the exposed portion (122, 122', 2122, 4122, 5122, 6122, 7122, 8122) is formed in a circular or in an irregular shape in the center area.

13. The electrode assembly (10, 10', 210, 310, 410, 510, 610, 710, 810) as claimed in claim 9, wherein the exposed portion (122, 122', 2122, 4122, 5122, 6122, 7122, 8122) is formed in an area of one of both sides of the second electrode (12, 12') in the entire range of the width direction.

14. A rechargeable battery comprising:
an electrode assembly (10, 10', 210, 310, 410, 510, 610, 710, 810) formed by winding a first electrode (11), a first separator (131), a second electrode (12, 12'), and a second separator (132, 132') in a stacked state;
a case (20) accommodating the electrode assembly (10, 10', 210, 310, 410, 510, 610, 710, 810); and
a cap assembly (40) sealing an opening of the case (20), wherein:
the second electrode (12, 12') comprises an uncoated portion (12c') formed at an outermost turn,
the second separator (132, 132') covers a part of the uncoated portion (12c'),
the uncoated portion (12c') comprises an exposed portion (122, 122', 2122, 4122, 5122, 6122, 7122, 8122) exposed from the second separator (132, 132'), and
the exposed portion (122, 122', 2122, 4122, 5122, 6122, 7122, 8122) and the second separator (132, 132') are in contact with an inner surface of the case (20).and/or further comprising a swelling tape interposed on an inner surface of the exposed portion (122, 122', 2122, 4122, 5122, 6122, 7122, 8122).

15. The rechargeable battery as claimed in claim 14, wherein the exposed portion (122, 122', 2122, 4122, 5122, 6122, 7122, 8122) is formed as a quarter turn to a half turn in the one turn, and the swelling tape is less than a turn amount of the exposed portion (122, 122', 2122, 4122, 5122, 6122, 7122, 8122) in a winding direction and/or wherein the exposed portion (122, 122', 2122, 4122, 5122, 6122, 7122, 8122) is formed as a quarter turn, and the swelling tape is less than the quarter turn.
